# EUROPEAN PATENT APPLICATION

(11) **EP 4 779 964 A1**
(43) Date of publication of application: **22.07.2026**
(21) Application number: 24864599.6
(22) Date of filing: 10.09.2024
(51) Int. Cl.: H04N 1/32

(54) **MEDIA CONTENT PROCESSING METHOD AND APPARATUS, AND DEVICE AND MEDIUM**

(30) Priority: 11.09.2023 CN 202311169981
(71) Applicant: Beijing Zitiao Network Technology Co., Ltd., Beijing 100190 (CN)
(72) Inventor: WANG, Yujia, Beijing 100028 (CN); CHEN, Zhiguang, Beijing 100028 (CN); WANG, Bin, Beijing 100028 (CN); WANG, Linpei, Beijing 100028 (CN); FENG, Dacang, Beijing 100028 (CN)
(74) Representative: Isarpatent
(86) International application number: PCT/CN2024/117931
(87) International publication number: WO 2025/055880

(57) **Abstract**

The embodiments of the present disclosure relate to a media content processing method and apparatus, and a device and a medium. The method is applied to a first application, and comprises: acquiring first media content, wherein the first media content is an image or a video; in response to a local storage operation or a media content generation operation for the first media content, processing on the image of the first media content to embed effect information to obtain second media content, and storing the second media content; acquiring third media content, wherein the third media content is obtained by means of an editing operation in a second application and/or a local editing operation; and in response to a posting operation for the third media content, parsing the third media content to determine the effect information, and presenting, on the third media content, an effect entry corresponding to the effect information.

## Description

### CROSS-REFERENCE TO RELATED APPLICATION(S)

The present application claims a priority right to Chinese Patent Application No. 202311169981.8, filed on September 11, 2023 and entitled "MEDIA CONTENT PROCESSING METHOD AND APPARATUS, DEVICE, AND MEDIUM", which is incorporated herein by reference in its entirety.

### FIELD

The present disclosure relates to the field of image processing technology, and in particular to a media content processing method and apparatus, a device, and a medium.

### BACKGROUND

In related technologies, effect markers added to images or videos within a preset application may be affected by local editing or editing in other applications, resulting in a loss of the effect markers when the images or videos are reused in the preset application.

### SUMMARY

In order to solve the problem described above, the present disclosure provides a media content processing method and apparatus, a device, and a medium.

An embodiment of the present disclosure provides a media content processing method applied to a first application. The method includes:
acquiring a first media content, where the first media content is an image or a video;
in response to a local storage operation or a media content generation operation performed on the first media content, processing an image of the first media content to embed effect information so as to obtain a second media content, and storing the second media content;
acquiring a third media content, where the third media content is obtained by an editing operation in a second application and/or a local editing operation; and
in response to a publishing operation on the third media content, parsing the third media content to determine the effect information, and displaying on the third media content an effect entry corresponding to the effect information.

An embodiment of the present disclosure further provides a media content processing apparatus configured in a first application. The apparatus includes:
a first acquisition module configured to acquire first media content, where the first media content is an image or a video;
an embedding module configured to, in response to a local storage operation or a media content generation operation performed on the first media content, process an image of the first media content to embed effect information so as to obtain second media content, and store the second media content;
a second acquisition module configured to acquire third media content, where the third media content is obtained by an editing operation in a second application and/or a local editing operation; and
a parsing module configured to, in response to a publishing operation on the third media content, parse the third media content to determine the effect information, and display on the third media content an effect entry corresponding to the effect information.

An embodiment of the present disclosure further provides an electronic device. The electronic device includes: a processor; and a memory configured to store instructions executable by the processor, where the processor is configured to read the executable instructions from the memory and execute the instructions to implement the media content processing method according to the embodiment of the present disclosure.

An embodiment of the present disclosure further provides a computer-readable storage medium having a computer program stored therein, where the computer program is configured to perform the media content processing method according to the embodiment of the present disclosure.

An embodiment of the present disclosure further provides a computer program product. The computer program product includes instructions that, when executed by a processor, cause the media content processing method according to the embodiment of the present disclosure to be implemented.

In the media content processing solution according to the embodiments of the present disclosure, the first application acquires the first media content, where the first media content is the image or the video; in response to the local storage operation or the media content generation operation performed on the first media content, processes the image of the first media content to embed the effect information so as to obtain the second media content, and stores the second media content; acquires the third media content, where the third media content is obtained by the editing operation in the second application and/or the local editing operation; and in response to the publishing operation on the third media content, parses the third media content to determine the effect information, and displays on the third media content the effect entry corresponding to the effect information.

### BRIEF DESCRIPTION OF THE DRAWINGS

The foregoing and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of a media content processing method according to an embodiment of the present disclosure;
FIG. 2 is a schematic diagram of an associated page according to an embodiment of the present disclosure;
FIG. 3 is a schematic diagram of watermark embedding according to an embodiment of the present disclosure;
FIG. 4 is a schematic diagram of watermark extraction according to an embodiment of the present disclosure;
FIG. 5 is a schematic diagram of a media content processing apparatus according to an embodiment of the present disclosure; and
FIG. 6 is a schematic diagram of an electronic device according to an embodiment of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different means, modules, or units, and are not used to limit the sequence of functions performed by these means, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of means in the implementations of the present disclosure are used for illustrative purposes only, and are not used to limit the scope of these messages or information.

In related technologies, effect markers added to images or videos within a preset application may be affected by local editing or editing in other applications, resulting in a loss of the effect markers when the images or videos are published in the preset application, thereby causing a loss of related effect information such as corresponding effect materials. As a consequence, other users cannot engage in interactions such as "Use this effect" based on the published effect works, resulting in reduced interactivity of the images or videos and a loss of related information.

An embodiment of the present disclosure provides a media content processing method. The method is described below with reference to specific embodiments.

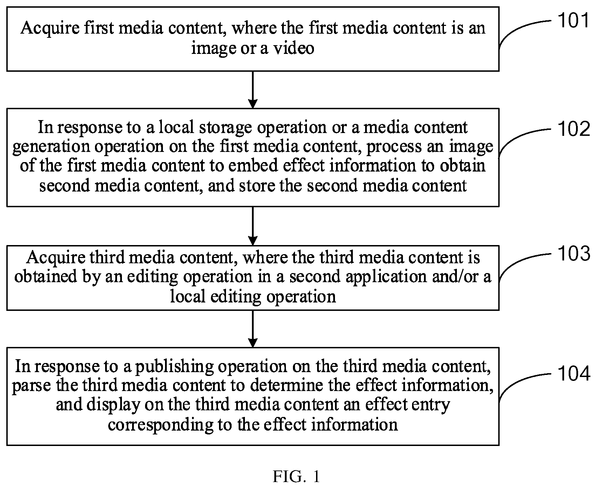

FIG. 1 is a schematic flowchart of a media content processing method according to an embodiment of the present disclosure. The method may be performed by a media content processing apparatus, where the apparatus may be implemented using software and/or hardware and may typically be integrated into an electronic device. As shown in FIG. 1, the method is applied to a first application and includes the following steps.

Step 101: A first media content is acquired, where the first media content is an image or a video.

The first media content may be media content currently being processed, which may be media content captured by an image capture module, or may be locally opened media content, which is not specifically limited. The first media content may be an image or a video. The media content processing method in this embodiment of the present disclosure is applied to the first application. The first application may be an application that supports capturing media content and performing effect processing, storage, work generation, publishing, and other operations on the media content, which is not specifically limited.

In some embodiments, the first application may acquire the first media content, and then, in response to an effect addition operation from a user, add an effect object to the first media content, or perform no further operations.

Step 102: In response to a local storage operation or a media content generation operation on the first media content, an image of the first media content is processed to embed effect information to obtain second media content, and store the second media content.

The effect information may be related attribute information of an effect included in the first media content. In the embodiments of the present disclosure, the effect information may include at least one effect identifier associated with the first media content, one effect identifier being used to represent one effect object. The effect object may be an element that can add a special display effect to media content. Different effect objects serve different functions, and the embodiments of the present disclosure do not limit specific effect objects. For example, the effect objects may include at least one of templates, makeup effects, filters, effects, stickers, text, or the like. The second media content may be the first media content to which the effect information has been added.

The effect information is embedded in the form of an invisible watermark. Watermarking technology involves embedding some identifier information as watermarks into digital carriers such as media content, documents, or software, or into indirect representations. The invisible watermark may be a watermark that is hidden in media content and virtually undetectable to eyes. In the embodiments of the present disclosure, the effect information is embedded into the first media content by using invisible watermarking. The invisible watermark exhibits high robustness and resistance to removal, such that the invisible watermark withstands operations such as compression, cropping, doodling, and rotation. By adding the invisible watermark, the effect information can be preserved without affecting the visual effect of the media content.

After the first application acquires the first media content, when the first application directly receives the local storage operation on the first media content, or receives the local storage operation on the first media content after adding an effect object to the first media content, or receives the media content generation operation on the first media content, where the media content generation operation may be an operation of generating a multimedia work, the first application may embed at least one piece of existing effect information into the image of the first media content to obtain the second media content, and store the second media content locally or online. That is, when the first media content needs to be stored locally or a media work needs to be generated from the first media content, the effect information is embedded into the first media content to obtain the second media content.

In some embodiments, processing the image of the first media content to embed the effect information includes: processing the image of the first media content to embed a plurality of pieces of effect information associated with the first media content, where the plurality of pieces of effect information is used to generate at least one piece of associated effect information of the first media content, the at least one piece of associated effect information being displayed on an associated page of the published first media content.

The associated effect information may be information for specifically describing at least one effect object corresponding to the effect information. The associated effect information may include attribute information of the at least one effect object, and the attribute information of the effect object may include the above-mentioned effect identifier, an effect name, an effect icon, etc. The display form of the associated effect information is not limited. For example, the associated effect information may be displayed in the form of a card. The associated page may be a page that displays specific details of the effect information associated with the first media content. Through the associated page, relevant content of each effect object corresponding to the effect information can be learned. For example, the associated page may be an effect detail page that includes effect objects such as music and a filter.

When processing an image of the first media content, the first application may embed the plurality of pieces of effect information associated with the first media content into the image. Subsequently, after the first media content is published, the associated page of the first media content may be displayed in response to a trigger operation, the at least one piece of associated effect information may be generated based on the effect information of the first media content, and the at least one piece of associated effect information may be displayed on the associated page. The specific display manner is not limited. For example, the at least one piece of associated effect information may be displayed in the form of a card.

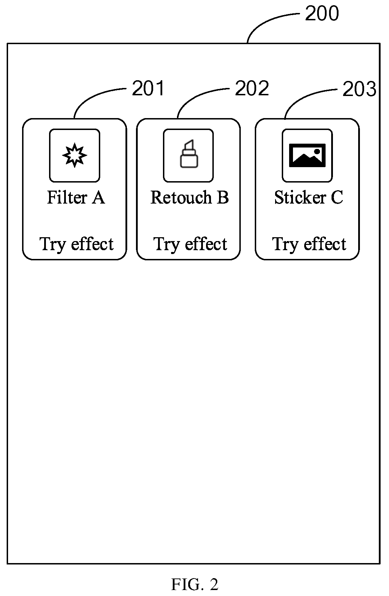

For example, FIG. 2 is a schematic diagram of an associated page according to an embodiment of the present disclosure. As shown in FIG. 2, an associated page 200 is displayed. The associated page 200 displays three pieces of associated effect information in the form of cards, which specifically include a card 201, a card 202, and a card 203 that respectively correspond to three effect objects of Filter A, Retouch B, and Sticker C. Each piece of associated effect information includes an effect name and an effect icon of one effect object. Optionally, each piece of associated effect information may further include a demo component. A user may preview the effect object corresponding to the associated effect information by triggering the demo component. In the figure, the demo component is implemented as a "Try effect" icon in the card. The associated page and the associated effect information in FIG. 2 are merely examples and are not limiting.

In the solution described above, the associated effect information of the effect information is displayed on the associated page of the published media content, enabling quick access for users to the corresponding effect element based on the associated effect information, which facilitates the utilization and recommendation of the effect information.

Step 103: A third media content is acquired, where the third media content is obtained by an editing operation in a second application and/or a local editing operation.

The second application may be an application different from the first application. For example, the second application may be an application specifically designed for media content editing. The editing operation in the second application and/or the local editing operation includes at least one of: a media content stitching operation, a media content overlay operation, a media content cropping operation, a subtitle addition operation, a compression operation, or the like.

In some embodiments, the second media content further includes an effect information field, where the effect information field is destroyed after the editing operation in the second application and/or the local editing operation. The effect information field may be one type of field information included in the second media content. The second media content may include a plurality of types of fields, and the effect information field includes the effect information associated with the first media content. The effect information field is generated by the first application and can be used in the first application, but is destroyed after the editing operation in the second application and/or the local editing operation.

Step 104: In response to a publishing operation on the third media content, parse the third media content to determine the effect information, and display on the third media content an effect entry corresponding to the effect information.

The publishing operation may be understood to as the user uploading the media content to a media content platform, editing publication information of the media content, and then publishing the media content, such that other users can view the media content. The effect entry may be understood as an entry that enables quick access to the detail page of the effect object to use the effect object. The representation form of the effect entry may be configured according to actual circumstances. For example, the effect entry may be the effect name of the effect object.

After obtaining the third media content as described above, the first application may, upon receiving the publishing operation on the third media content, parse the third media content to determine the effect information included therein. Specifically, the first application may extract a target watermark from the third media content by using a transform domain watermarking algorithm, that is, convert the third media content into a transform domain image to read the target watermark therefrom, and read the effect information from the target watermark. Then, after publishing the third media content, the first application displays the third media content, and displays on the third media content the effect entry corresponding to the effect information.

In some embodiments, when the effect information includes a plurality of effect identifiers, displaying on the third media content the effect entry corresponding to the effect information may include: determining a target effect identifier based on embedding times of the plurality of effect identifiers, and displaying, based on the target effect identifier, an effect name and/or an effect icon of a corresponding target effect object on the third media content.

The embedding time may be understood as a specific time at which the effect identifier is added to the first media content. The embedding times of different effect identifiers may be the same or different. The target effect identifier may be an effect identifier among the plurality of effect identifiers for which an effect entry needs to be displayed. The attribute information of one effect object may include the above-mentioned effect identifier, effect name, effect icon, etc. These attribute information may be used as the effect entry for the effect object.

When the first application displays on the third media content the effect entry corresponding to the effect information, if the effect information includes one effect identifier, the first application may directly display the effect name and/or the effect icon of the effect object corresponding to the effect identifier; and if the effect information includes a plurality of effect identifiers, the first application may select one effect identifier as the target effect identifier based on the embedding times of the effect identifiers. The specific selection manner is not limited. For example, an effect identifier with the earliest embedding time may be used as the target effect identifier. The first application may then display on the third media content the effect name and/or the effect icon of the target effect object corresponding to the target effect identifier as the effect entry. The effect name may serve as an effect anchor for the target effect object. Then, in response to receiving a trigger operation on the effect entry, the first application may display the effect detail page of the target effect object, and may display on the effect detail page at least one piece of associated effect information corresponding to the effect information, that is, a plurality of pieces of associated effect information of a plurality of effect objects corresponding to the plurality of effect identifiers. The specific display position may be set, for example, in the top area, to enable a user to use the above-mentioned plurality of effect objects on the effect detail page.

Optionally, determining the target effect identifier based on the embedding times of the plurality of effect identifiers may include: in response to the plurality of effect identifiers sharing the same embedding time, determining from the plurality of effect identifiers an effect identifier with the earliest parsing time as the target effect identifier; and otherwise, determining from the plurality of effect identifiers an effect identifier with the latest embedding time as the target effect identifier.

When determining the target effect identifier, the first application may determine whether the embedding times of the plurality of effect identifiers are the same. If the embedding times of the plurality of effect identifiers are the same, the first application compares the parsing times of the effect identifiers, where the parsing time of an effect identifier indicates an exact time point at which the effect identifier is parsed during the parsing process of the third media content, and determines the effect identifier with the earliest parsing time as the target effect identifier. If the embedding times of the plurality of effect identifiers are different, the first application compares the embedding times of the effect identifiers, and determines the effect identifier with the latest embedding time as the target effect identifier.

In the solution described above, when the effect information includes one effect identifier, the effect entry for the effect object corresponding to the effect identifier may be displayed directly on the third media content. When the effect information includes a plurality of effect identifiers, the target effect identifier may be determined based on the embedding times, and the effect entry for the target effect object corresponding to the target effect identifier may be displayed on the third media content. This enables more flexible display of the effect entry, better aligns with actual needs of users, and facilitates improving the efficiency of effect recommendation and utilization.

In the media content processing solution according to the embodiments of the present disclosure, the first application acquires the first media content, where the first media content is an image or a video; in response to the local storage operation or the media content generation operation on the first media content, processes the image of the first media content to embed the effect information so as to obtain the second media content, and stores the second media content; acquires the third media content, where the third media content is obtained by the editing operation in the second application and/or the local editing operation; and in response to the publishing operation on the third media content, parses the third media content to determine the effect information, and displays on the third media content the effect entry corresponding to the effect information. With the technical solution described above, the first application can embed the corresponding effect information when storing or generating the media content, so as to be able to parse the effect information and display the corresponding effect entry when acquiring and publishing the media content edited by the second application subsequently. Since the effect information is embedded in the media content, it is ensured that the effect information will not be lost due to editing by other applications, thereby improving the interactivity of the media content and facilitating the recommendation and utilization of related effects.

In some embodiments, embedding the effect information into the first media content to obtain the second media content may include: converting the effect information into a target watermark by using the transform domain watermarking algorithm and embedding the target watermark into the first media content to obtain the second media content.

The transform domain watermarking algorithm may convert pixel information of an image into a transform domain, and then add information in the transform domain before converting it into the spatial domain. During this process, spatial domain information is also modified, so transform domain watermarking may also be understood as indirect spatial domain watermarking. In the embodiments of the present disclosure, the transform domain watermarking algorithm may include at least two of discrete cosine transform (DCT), discrete wavelet transformation (DWT), or discrete Fourier transform (DFT). DCT can convert an image into a discrete cosine transform domain for watermark embedding and extraction, DWT can convert an image into a discrete wavelet transform domain for watermark embedding and extraction, and DFT can convert an image into a Fourier transform domain for watermark embedding and extraction.

The first application may convert the first media content into the transform domain image by using the transform domain watermarking algorithm, and there are one or more of the transform domain images. When the first media content is the image, it is converted into one transform domain image, and when the first media content is the video, it is converted into a plurality of transform domain images. Then, the first application encodes the effect information, modifies a part of pixel values of the above-mentioned transform domain image with the encoded effect information, and performs an inverse transform on the transform domain image to which the effect information has been added by using the transform domain watermarking algorithm to obtain a watermarked image. The effect information is converted into the target watermark through the above-mentioned inverse transform, and the target watermark is included in the watermarked image. Then, the first application determines the second media content as a single watermarked image or a video synthesized from a plurality of watermarked images.

In the solution described above, the effect information is embedded into the media content by using the transform domain watermarking algorithm. Due to high robustness of the transform domain watermarking algorithm, compression, noise, occlusion, and other common attacks can be resisted to a certain extent under proper algorithm configuration. This ensures that the effect information will not be lost due to editing, thereby improving the interactivity of the media content.

In some embodiments, when the first media content is a video, embedding the effect information into the first media content to obtain the second media content may include: extracting at least one target image frame from the video; and embedding the effect information into the at least one target image frame to obtain at least one watermarked image frame, and synthesizing the second media content based on the at least one watermarked image frame and other video frames in the video excluding the target image frame. Optionally, the target image frame includes image frames extracted from the video at preset time intervals or all image frames of the video.

The target image frame may be an image frame to which the effect information is to be embedded, and the target image frame may include some of or all of image frames included in the video. The watermarked image frame may be an image frame to which the effect information has been embedded. The preset time interval may be a time interval for extracting image frames from the video as the target image frame, and may specifically be configured according to actual circumstances. For example, the preset time interval may be 4 seconds, i.e., extracting an image frame from the video as the target image frame every 4 seconds. For another example, the preset time interval may be configured as the reciprocal of a frame rate of the video, where the frame rate may be a number of images refreshed per second in the video, such that all image frames of the video may be determined as the target image.

When the first media content is a video, the media content processing apparatus may first extract image frames from the video when embedding the effect information into the first media content, determine at least one extracted image frame as the at least one target image frame, and then embed the effect information into each target image frame to obtain a corresponding watermarked image frame, so as to obtain the at least one watermarked image frame; and synthesize the at least one watermarked image frame with other video frames in the video excluding the target image frame to obtain a new video, i.e., the second media content. By adding the effect information to at least one image frame of the video, the effect information can be preserved even if an image frame of the video is deleted subsequently, thereby improving the robustness of the effect information.

In some embodiments, processing the image of the first media content to embed the effect information so as to obtain the second media content may include: for each effect identifier, comparing a number of available bits in a preset field of the image of the first media content against a number of bits of a complete effect identifier of the current effect identifier to determine whether to add the effect identifier.

When the first media content is an image, the effect information is embedded in the image. Alternatively, when the first media content is a video, the effect information is embedded in each target image frame as described above, that is, the image of the first media content is the target image frame, to which each effect identifier may be embedded in turn. For each effect identifier, before embedding, it is determined whether the image of the first media content allows addition of the effect identifier. Specifically, the number of available bits in the preset field of the image of the first media content may be compared against the number of bits of the complete effect identifier of the current effect identifier. If it is determined that the number of available bits is greater than or equal to the number of bits of the complete effect identifier of the current effect identifier, the embedding of the current effect identifier will be performed. Otherwise, the embedding of the current effect identifier is aborted. The preset field may be a specific field in an image for adding characters of effects. A total number of bits of the preset field is the maximum number of characters that can be added to the image. For example, the total number of bits of the preset field may be 19. The number of available bits may be the count of unassigned bits in the preset field that remain unassigned to character storage. Before the embedding of the effect identifier, it is determined whether the embedding of the complete effect identifier is allowed, and the embedding may be aborted if it is not allowed. This prevents truncation of the effect identifier that could cause incorrect effect object mapping, so as to improve the accuracy of embedding of the effect information, which helps improve the accuracy of subsequent effect object utilization.

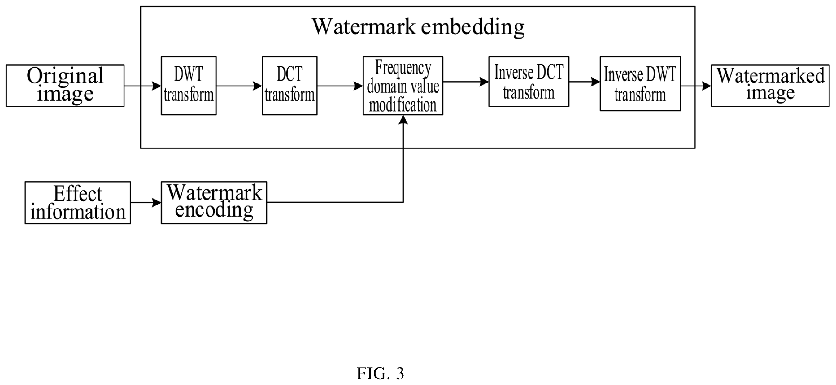

The embedding and extraction processes of the effect information as a watermark in the embodiments of the present disclosure is described below with an example where the first media content is an image and the transform domain watermarking algorithm includes DWT and DCT. For example, FIG. 3 is a schematic diagram of watermark embedding according to an embodiment of the present disclosure, in which an original image is the above-mentioned first media content, and the original image undergoes DWT and DCT transforms to obtain a transform domain image. Effect information is watermark-encoded. A specific encoding method may for example include: converting the effect information into binary information, and modifying a part of pixel values in the transform domain image with the watermark-encoded effect information, so as to implement embedding of the effect information. The transform domain image to which the effect information has been embedded undergoes inverse DCT and inverse DWT transforms to obtain a watermarked image added with a target watermark.

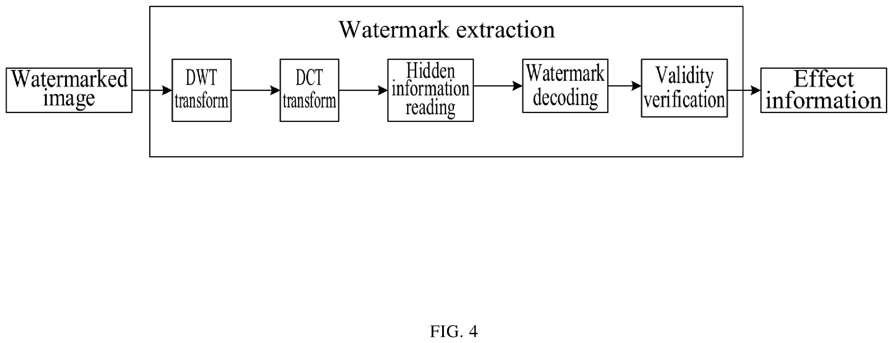

For example, FIG. 4 is a schematic diagram of watermark extraction according to an embodiment of the present disclosure. The watermarked image undergoes DWT and DCT transforms to obtain a transform domain image. Hidden information, i.e., the watermark-encoded effect information, is read from the transform domain image, and then the hidden information is watermark-decoded and subjected to validity verification to obtain the effect information. The validity verification here may be used to determine whether or not the watermark-decoded effect information is correct, which may specifically be implemented by self-checking.

In the embodiments of the present disclosure, the effect information is embedded into the media content by using the transform domain watermarking algorithm. Due to high robustness of the transform domain watermarking algorithm, compression, noise, occlusion, and other common attacks can be resisted to a certain extent under proper algorithm configuration. This ensures that the effect information will not be lost due to editing, thereby improving the interactivity of the media content.

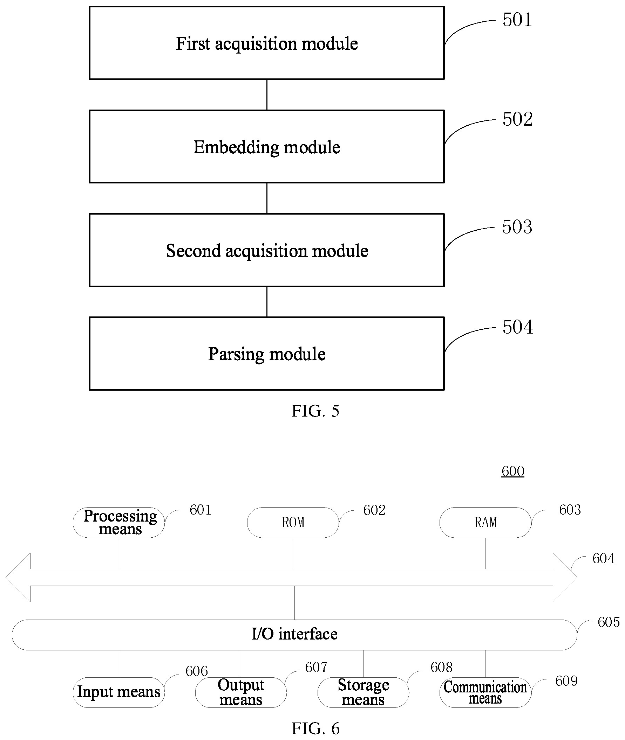

FIG. 5 is a schematic diagram of a media content processing apparatus according to an embodiment of the present disclosure. The apparatus may be implemented by software and/or hardware and may typically be integrated into an electronic device. As shown in FIG. 5, the apparatus includes:
a first acquisition module 501 configured to acquire first media content, where the first media content is an image or a video;
an embedding module 502 configured to, in response to a local storage operation or a media content generation operation on the first media content, process an image of the first media content to embed effect information so as to obtain second media content, and store the second media content;
a second acquisition module 503 configured to acquire third media content, where the third media content is obtained by an editing operation in a second application and/or a local editing operation; and
a parsing module 504 configured to, in response to a publishing operation on the third media content, parse the third media content to determine the effect information, and display on the third media content an effect entry corresponding to the effect information.

Optionally, the editing operation in the second application and/or the local editing operation includes at least one of: a media content stitching operation, a media content overlay operation, a media content cropping operation, a media content compression operation, or a subtitle addition operation.

Optionally, the embedding module 502 is configured to:
process the image of the first media content to embed the effect information associated with the first media content, where the effect information is used to generate at least one piece of associated effect information of the first media content, the at least one piece of associated effect information being displayed on an associated page of the published first media content.

Optionally, the second media content further includes an effect information field, where the effect information field is destroyed after the editing operation in the second application and/or the local editing operation.

Optionally, the effect information is embedded in the form of an invisible watermark.

Optionally, the embedding module 502 is configured to:
convert the effect information into a target watermark by using a transform domain watermarking algorithm and embed the target watermark into the first media content to obtain the second media content.

Optionally, the parsing module 504 includes an extraction unit configured to:
extract the target watermark from the third media content by using the transform domain watermarking algorithm, and read the effect information from the target watermark.

Optionally, the transform domain watermarking algorithm includes at least two of discrete cosine transform, discrete wavelet transformation, or discrete Fourier transform.

Optionally, when the first media content is a video, the embedding module 502 is configured to:
extract at least one target image frame from the video; and
embed the effect information into the at least one target image frame to obtain at least one watermarked image frame, and synthesize the second media content based on the at least one watermarked image frame and other video frames in the video excluding the target image frame.

Optionally, the target image frame includes image frames extracted from the video at preset time intervals or all image frames of the video.

Optionally, the effect information includes at least one effect identifier associated with the first media content, one effect identifier being used to represent one effect object.

Optionally, when the effect information includes a plurality of effect identifiers, the parsing module 504 includes an entry unit configured to:
determine a target effect identifier based on embedding times of the plurality of effect identifiers, and display, based on the target effect identifier, an effect name and/or an effect icon of a corresponding target effect object on the third media content.

Optionally, the entry unit is configured to:
in response to the plurality of effect identifiers sharing the same embedding time, determine from the plurality of effect identifiers an effect identifier with the earliest parsing time as the target effect identifier; and otherwise, determine from the plurality of effect identifiers an effect identifier with the latest embedding time as the target effect identifier.

Optionally, the embedding module 502 is configured to:
for each effect identifier, compare a number of available bits in a preset field of the image of the first media content against a number of bits of a complete effect identifier of the current effect identifier to determine whether to add the effect identifier.

The media content processing apparatus according to this embodiment of the present disclosure can perform the media content processing method according to any embodiment of the present disclosure, and has corresponding functional modules and beneficial effects for performing the method.

An embodiment of the present disclosure further provides a computer program product, including a computer program/instruction that, when executed by a processor, causes the media content processing method according to any embodiment of the present disclosure to be implemented.

FIG. 6 is a schematic diagram of an electronic device according to an embodiment of the present disclosure.

Reference is made specifically to FIG. 6 below, which is a schematic diagram of an electronic device 600 suitable for implementing the embodiments of the present disclosure. The electronic device 600 in this embodiment of the present disclosure may include, but is not limited to, mobile terminals such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and fixed terminals such as a digital TV and a desktop computer. The electronic device shown in FIG. 6 is merely an example, and shall not impose any limitation on the function and scope of use of the embodiments of the present disclosure.

As shown in FIG. 6, the electronic device 600 may include a processing means (for example, a central processing unit or a graphics processing unit) 601 that may perform a variety of appropriate actions and processing in accordance with a program stored in a read-only memory (ROM) 602 or a program loaded from a storage means 608 into a random-access memory (RAM) 603. The RAM 603 further stores various programs and data required for the operation of the electronic device 600. The processing means 601, the ROM 602, and the RAM 603 are connected to one another through a bus 604. An input/output (I/O) interface 605 is also connected to the bus 604.

Generally, the following means may be connected to the I/O interface 605: an input means 606 including, for example, a touchscreen, a touchpad, a keyboard, a mouse, a camera, a microphone, an accelerometer, and a gyroscope; an output means 607 including, for example, a liquid crystal display (LCD), a speaker, and a vibrator; the storage means 608 including, for example, a magnetic tape and a hard disk drive; and a communication means 609. The communication means 609 may allow the electronic device 600 to perform wireless or wired communication with other devices to exchange data. Although FIG. 6 shows the electronic device 600 having various means, it should be understood that it is not required to implement or have all of the shown means. It may be an alternative to implement or have more or fewer means.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication means 609, installed from the storage means 608, or installed from the ROM 602. When the computer program is executed by the processing means 601, the above-mentioned functions defined in the media content processing method of the embodiment of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, means, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, means, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, means, or device. The program code contained in the computer-readable medium may be transmitted by any suitable medium, including but not limited to: electric wires, optical cables, radio frequency (RF), and the like, or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above-mentioned computer-readable medium may be included in the above-mentioned electronic device. Alternatively, the computer-readable medium may exist independently, without being assembled into the electronic device.

The computer-readable medium carries one or more programs that, when executed by the electronic device, cause the electronic device to: acquire first media content, where the first media content is an image or a video; in response to a local storage operation or a media content generation operation on the first media content, process an image of the first media content to embed effect information so as to obtain second media content, and store the second media content; acquire third media content, where the third media content is obtained by an editing operation in a second application and/or a local editing operation; and in response to a publishing operation on the third media content, parse the third media content to determine the effect information, and display on the third media content an effect entry corresponding to the effect information.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a unit does not constitute a limitation on the unit itself under certain circumstances.

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, means, or device. The machine-readable medium may be a machine-readable signal medium or a machine-readable storage medium. The machine-readable medium may include, but is not limited to, an electronic, magnetic, optical, electromagnetic, infrared, or semiconductor system, means, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

It can be understood that before the use of the technical solutions disclosed in the embodiments of the present disclosure, the user shall be informed of the type, range of use, use scenarios, etc., of information involved in the present disclosure in an appropriate manner in accordance with the relevant laws and regulations, and the authorization of the user shall be obtained.

The descriptions above are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the concept disclosed above. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the discussions above, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A media content processing method applied to a first application, the method comprising:
Acquiring a first media content, wherein the first media content is an image or a video;
in response to a local storage operation or a media content generation operation performed on the first media content, processing an image of the first media content to embed effect information to obtain a second media content, and storing the second media content;
acquiring a third media content, wherein the third media content is obtained by an editing operation in a second application and/or a local editing operation; and
in response to a publishing operation on the third media content, parsing the third media content to determine the effect information, and displaying on the third media content an effect entry corresponding to the effect information.

2. The method according to claim 1, wherein the editing operation in the second application and/or the local editing operation comprises at least one of: a media content stitching operation, a media content overlay operation, a media content cropping operation, a media content compression operation, or a subtitle addition operation.

3. The method according to claim 1, wherein processing the image of the first media content to embed the effect information comprises:
processing the image of the first media content to embed the effect information associated with the first media content, wherein the effect information is used to generate at least one piece of associated effect information of the first media content, the at least one piece of associated effect information being displayed on an associated page of the published first media content.

4. The method according to claim 2, wherein the second media content further comprises an effect information field, wherein the effect information field is destroyed after the editing operation in the second application and/or the local editing operation.

5. The method according to claim 1, wherein the effect information is embedded in the form of an invisible watermark.

6. The method according to claim 1, wherein embedding the effect information into the first media content to obtain the second media content comprises:
converting the effect information into a target watermark by using a transform domain watermarking algorithm and embedding the target watermark into the first media content to obtain the second media content.

7. The method according to claim 6, wherein parsing the third media content to determine the effect information comprises:
extracting the target watermark from the third media content by using the transform domain watermarking algorithm, and reading the effect information from the target watermark.

8. The method according to claim 6 or 7, wherein the transform domain watermarking algorithm comprises at least two of discrete cosine transform, discrete wavelet transformation, or discrete Fourier transform.

9. The method according to claim 1, wherein in an event of the first media content being a video, embedding the effect information into the first media content to obtain the second media content comprises:
extracting at least one target image frame from the video; and
embedding the effect information into the at least one target image frame to obtain at least one watermarked image frame, and synthesizing the second media content based on the at least one watermarked image frame and other video frames in the video excluding the target image frame.

10. The method according to claim 9, wherein the target image frame comprises image frames extracted from the video at preset time intervals or all image frames of the video.

11. The method according to claim 1, wherein the effect information comprises at least one effect identifier associated with the first media content, one effect identifier being used to represent one effect object.

12. The method according to claim 11, wherein in an event of the effect information comprising a plurality of effect identifiers, displaying on the third media content the effect entry corresponding to the effect information comprises:
determining a target effect identifier based on embedding times of the plurality of effect identifiers, and displaying, based on the target effect identifier, an effect name and/or an effect icon of a corresponding target effect object on the third media content.

13. The method according to claim 12, wherein determining the target effect identifier based on the embedding times of the plurality of effect identifiers comprises:
in response to the plurality of effect identifiers sharing the same embedding time, determining from the plurality of effect identifiers an effect identifier with the earliest parsing time as the target effect identifier; and otherwise, determining from the plurality of effect identifiers an effect identifier with the latest embedding time as the target effect identifier.

14. The method according to claim 11, wherein processing the image of the first media content to embed the effect information to obtain the second media content comprises:
for each effect identifier, comparing a number of available bits in a preset field of the image of the first media content against a number of bits of a complete effect identifier of the current effect identifier to determine whether to add the effect identifier.

15. A media content processing apparatus configured in a first application, the apparatus comprising:
a first acquisition module configured to acquire first media content, wherein the first media content is an image or a video;
an embedding module configured to, in response to a local storage operation or a media content generation operation on the first media content, process an image of the first media content to embed effect information to obtain second media content, and store the second media content;
a second acquisition module configured to acquire third media content, wherein the third media content is obtained by an editing operation in a second application and/or a local editing operation; and
a parsing module configured to, in response to a publishing operation on the third media content, parse the third media content to determine the effect information, and display on the third media content an effect entry corresponding to the effect information.

16. An electronic device, comprising:
a processor; and
a memory configured to store instructions executable by the processor, wherein
the processor is configured to read the executable instructions from the memory and execute the instructions to implement the media content processing method according to any one of claims 1 to 14.

17. A computer-readable storage medium having a computer program stored therein, wherein the computer program is configured for execution of the media content processing method according to any one of claims 1 to 14.

18. A computer program product, comprising instructions that, when executed by a processor, cause the method according to any of claims 1 to 14 to be implemented.
